(19) **Europäisches Patentamt European Patent Office Office européen des brevets**

(11) **EP 4 756 907 A1**

(12) **EUROPEAN PATENT APPLICATION**
published in accordance with Art. 153(4) EPC

(43) Date of publication:
**10.06.2026 Bulletin 2026/24**

(21) Application number: **24850768.3**

(22) Date of filing: **17.07.2024**

(51) International Patent Classification (IPC):
$H01M\ 4/36^{(2006.01)}$    $H01M\ 4/587^{(2010.01)}$
$H01M\ 4/133^{(2010.01)}$    $H01M\ 10/05^{(2010.01)}$

(52) Cooperative Patent Classification (CPC):
Y02E 60/10

(86) International application number:
**PCT/CN2024/105939**

(87) International publication number:
**WO 2025/031118 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.08.2023 CN 202310980458**

(71) Applicant: **Ningde Amperex Technology Limited Ningde, Fujian 352100 (CN)**

(72) Inventor: **LI, Dalu Ningde, Fujian 352100 (CN)**

(74) Representative: **Dehns Germany Partnerschaft mbB Theresienstraße 6-8 80333 München (DE)**

(54) **NEGATIVE ELECTRODE ACTIVE MATERIAL, SECONDARY BATTERY AND ELECTRONIC DEVICE**

(57) This application provides a negative electrode active material, a secondary battery, and an electronic apparatus. A pressurized compacted density of a powder of the negative electrode active material is a $g/cm^3$, a pressure-released compacted density is b $g/cm^3$, and a pressure-release rebound rate is c, where $c = (a - b) / a \times 100\%$, and $1.5\% \leq c \leq 20\%$; and a and c satisfy: $c = k \times (a - 1)$, where $0.08 \leq k \leq 0.20$. By regulating the value of k within the above range and ensuring a and c satisfy the above relationship, the negative electrode active material can maintain high porosity under a high compacted density, facilitating the infiltration of an electrolyte into the negative electrode sheet, enhancing the diffusion rate of active ions, and improving the kinetic performance of the secondary battery. Additionally, the heat dissipation performance of the negative electrode sheet can be improved, the temperature rise of the secondary battery can be reduced, and the cycle performance of the secondary battery can be improved.

FIG. 1

**Description**

This application claims priority to Chinese Patent Application No. 202310980458.7, filed with the China National Intellectual Property Administration on August 4, 2023, and entitled "NEGATIVE ELECTRODE ACTIVE MATERIAL, NEGATIVE ELECTRODE SHEET, SECONDARY BATTERY, AND ELECTRONIC APPARATUS", which is incorporated herein by reference in its entirety.

**TECHNICAL FIELD**

This application relates to the field of electrochemical technologies, and in particular, to a negative electrode active material, a secondary battery, and an electronic apparatus.

**BACKGROUND**

Secondary batteries have outstanding advantages such as high energy density, low self-discharge rate, long cycle life, and stable discharge performance, and are widely used in industrial production and daily life.
Artificial graphite is commonly used as the negative electrode active material for secondary batteries. Natural graphite is relatively soft and not resistant to pressure, so that negative electrode sheets including natural graphite exhibit low porosity and poor heat dissipation at high compacted densities, leading to a higher overall temperature of the secondary battery. Additionally, as charge-discharge cycles progress, the negative electrode sheet, constrained by the package shell, is continuously compressed under the influence of internal stress from swelling, so that the negative electrode sheet is further compacted, further reducing its porosity. This makes electrolyte infiltration difficult, increases temperature rise, and accelerates the degradation of cycle performance. Therefore, there is a need to improve the performance of secondary batteries using natural graphite.

**SUMMARY**

This application is intended to provide a negative electrode active material, a secondary battery, and an electronic apparatus to reduce the temperature rise of the secondary battery and improve the cycle performance of the secondary battery. The specific technical solution is as follows:
According to a first aspect of this application, a negative electrode active material is provided, where a pressurized compacted density of a powder of the negative electrode active material is a g/cm$^3$, a pressure-released compacted density is b g/cm$^3$, and a pressure-release rebound rate is c, where $c = (a - b) / a \times 100\%$, and $1.5\% \leq c \leq 20\%$; and a and c satisfy: $c = k \times (a - 1)$, where $0.08 \leq k \leq 0.20$, and a test load for the pressurized compacted density is 5 tons. By controlling the value of k within the above range and ensuring that a and c satisfy the above relationship, the negative electrode active material can maintain high porosity under high compacted density. Applying the negative electrode active material of this application to a secondary battery facilitates the infiltration of an electrolyte into the negative electrode sheet, enhances the diffusion rate of active ions (for example, lithium ions), and improves the kinetic performance of the secondary battery, for example, rate performance. Additionally, higher porosity can improve the heat dissipation rate of the negative electrode sheet during a delithiation process, improve the heat dissipation performance of the negative electrode sheet, reduce the temperature rise of the secondary battery, thereby reducing the increase in impedance of the secondary battery during a cycling process and the decomposition of the solid electrolyte interphase (SEI film) film on the surface of the negative electrode sheet, and improving the cycle performance of the secondary battery.
In some embodiments of this application, $5\% \leq c \leq 15\%$, and $0.15 \leq k \leq 0.20$. By regulating the values of c and k within the above ranges, the negative electrode active material can achieve higher porosity under high compacted density. Applying the negative electrode active material to a secondary battery can further enhance the diffusion rate of ions, improving the kinetic performance of the secondary battery. Additionally, this further improves the heat dissipation performance of the negative electrode sheet, reduces the temperature rise of the secondary battery, thereby reducing the increase in impedance of the secondary battery during a cycling process and the decomposition of the SEI film on the surface of the negative electrode sheet, and improving the cycle performance of the secondary battery.
In some embodiments of this application, $1.2 \leq a \leq 2.0$. By regulating the value of a within the above range, the negative electrode active material can have an appropriate pressure-release rebound rate. Applying the negative electrode active material to a secondary battery facilitates increasing the porosity of the negative electrode sheet and enhancing the infiltration of the electrolyte into the negative electrode sheet, thereby reducing the temperature rise of the secondary battery and improving the kinetic performance and cycle performance of the secondary battery.
In some embodiments of this application, $1.2 \leq b \leq 1.9$. By regulating the value of b within the above range, the negative electrode active material can have an appropriate pressure-release rebound rate. Applying the negative electrode active material to a secondary battery facilitates the infiltration of the electrolyte into the negative electrode sheet, mitigates the accumulation of internal stress in the negative electrode sheet, thereby reducing the temperature rise of the secondary battery and improving the kinetic performance and cycle performance of the secondary battery.

In some embodiments of this application, the negative electrode active material includes graphite with a hard carbon on its surface. The negative electrode active material with the above characteristics has good compression resistance. Graphite particles have high crystallinity, providing lithium storage sites. The hard carbon on the surface of graphite has lower crystallinity, which can improve the electronic conductivity of the negative electrode active material and increase the pores for electrolyte infiltration. Applying the negative electrode active material with the above characteristics to a secondary battery not only enables the secondary battery to have high energy density but also reduces the temperature rise of the secondary battery, improving the kinetic performance and cycle performance of the secondary battery.

In some embodiments of this application, the negative electrode active material satisfies $0.3 \leq I_d/I_g \leq 0.7$, where $I_d$ is the peak intensity of the d peak in the Raman spectrum of the negative electrode active material, and $I_g$ is the peak intensity of the g peak in the Raman spectrum of the negative electrode active material. The negative electrode active material with an $I_d/I_g$ value within the above range has an appropriate degree of surface defects, which facilitates achieving an appropriate pressure-release rebound rate, so that the negative electrode active material maintains a good pore structure with high porosity after cold pressing, thereby further enhancing the diffusion rate of active ions, improving the heat dissipation performance of the negative electrode sheet, reducing the temperature rise of the secondary battery, thus further reducing the increase in impedance of the secondary battery during a cycling process and the decomposition of the SEI film on the surface of the negative electrode sheet, and better improving the kinetic performance and cycle performance of the secondary battery.

In some embodiments of this application, the powder OI value of the negative electrode active material is 2 to 5. By regulating the powder OI value of the negative electrode active material within the above range, the isotropic properties of the negative electrode active material can be improved, facilitating the diffusion of active ions. Applying the negative electrode active material with the above characteristics to a secondary battery can balance the kinetic performance and cycle performance of the secondary battery.

In some embodiments of this application, a graphitization degree G of the negative electrode active material is 90.5% to 98%. By regulating the graphitization degree of the negative electrode active material within the above range, it indicates that the surface of the negative electrode active material has a lower graphitization degree and lower crystallinity, which can improve the electronic conductivity of the negative electrode active material and increase the pores for electrolyte infiltration, thereby facilitating improving the kinetic performance and cycle performance of the secondary battery.

According to a second aspect of this application, a secondary battery is provided, including a positive electrode sheet, a negative electrode sheet, and an electrolyte, where the negative electrode sheet includes a negative electrode current collector and a negative electrode active material layer disposed on at least one surface of the negative electrode current collector, the negative electrode active material layer including the negative electrode active material provided in the first aspect of this application. Applying the negative electrode active material of this application to the negative electrode sheet enables the negative electrode sheet to have a higher porosity and good heat dissipation performance, thereby reducing the temperature rise of the secondary battery and improving the kinetic performance and cycle performance of the secondary battery.

In some embodiments of this application, the compacted density of the negative electrode sheet is q g/cm$^3$, the porosity of the negative electrode sheet is p, and q and p satisfy p = -0.37 $\times$ q + h, where $0.8 \leq h \leq 1.0$; and $1.2 \leq q \leq 1.9$, and $10\% \leq p \leq 60\%$. The negative electrode sheet with the above characteristics has a higher compaction density and higher porosity, with good heat dissipation performance. Applying the negative electrode sheet to a secondary battery can reduce the temperature rise of the secondary battery and improve the kinetic performance and cycle performance of the secondary battery.

In some embodiments of this application, an OI value of the negative electrode sheet ranges from 8 to 30. The negative electrode sheet with an OI value within the above range has good ion diffusion performance. Applying the negative electrode sheet to a secondary battery facilitates reducing the temperature rise of the secondary battery and improving the kinetic performance and cycle performance of the secondary battery.

In some embodiments of this application, the negative electrode sheet satisfies $0.3 \leq I_d'/I_g' \leq 0.8$, where $I_d'$ is the peak intensity of the d peak in the Raman spectrum of the negative electrode sheet in a 100 $\mu$m $\times$ 100 $\mu$m region, and $I_g'$ is the peak intensity of the g peak in the Raman spectrum of the negative electrode sheet in a 100 $\mu$m $\times$ 100 $\mu$m region. The negative electrode sheet with an $I_d'/I_g'$ value within the above range has good electronic conductivity. Applying the negative electrode sheet to a secondary battery can improve the kinetic performance and cycle performance of the secondary battery.

According to a third aspect of this application, an electronic apparatus is provided, including the secondary battery provided in the second aspect of this application. The secondary battery of this application has good cycle performance and kinetic performance, thereby enabling the electronic apparatus of this application to have a relatively long service life.

The beneficial effects of this application are as follows:
This application provides a negative electrode active material, a secondary battery, and an electronic apparatus. The pressurized compacted density of the powder of the negative electrode active material is a g/cm$^3$, the pressure-released compacted density is b g/cm$^3$, and the pressure-release rebound rate is c, where $c = (a - b)/a \times 100\%$, and $1.5\% \leq c \leq 20\%$; and a and c satisfy: $c = k \times (a - 1)$, where $0.08 \leq k \leq 0.20$. By regulating the value of k within the above range and ensuring that a and c satisfy the above relationship, the negative electrode active material can maintain high porosity under high compacted density. Applying the negative electrode active material of this application to a secondary battery facilitates the infiltration of the electrolyte into the negative electrode sheet, enhances the diffusion rate of active ions (for example, lithium ions), and improves the kinetic performance of the secondary battery, for example, rate performance. Additionally, higher porosity can improve the heat dissipation rate of the negative electrode sheet during a delithiation process, improve the heat dissipation performance of the negative electrode sheet, reduce the temperature rise of the secondary battery, thereby reducing the increase in impedance of the secondary battery during a cycling process and the decomposition of the SEI film on the surface of the negative electrode sheet, improving the cycle performance of the secondary battery.

Certainly, implementing any product or method of this application does not necessarily require all the advantages described above.

## BRIEF DESCRIPTION OF DRAWINGS

To describe the technical solutions in some embodiments of this application or in the prior art more clearly, the following briefly describes the accompanying drawings required for describing some embodiments or the prior art. Apparently, the accompanying drawings in the following descriptions show only some embodiments of this application, and persons of ordinary skill in the art may still derive other embodiments from these accompanying drawings.

FIG. 1 is a scanning electron microscope (SEM) image of the particle morphology of a negative electrode active material prepared in Example 1-1;
FIG. 2 is a comparison diagram of an 800-cycle performance of lithium-ion batteries in Example 1-1 and Comparative Example 1-1;
FIG. 3 is a Raman spectra of negative electrode active materials prepared in Example 1-1 and Comparative Example 1-1;
FIG. 4 is a Raman spectra of negative electrode sheets in Example 1-1 and Comparative Example 1-5;
FIG. 5 is an X-ray diffraction pattern of a negative electrode active material prepared in Example 1-1; and
FIG. 6 is an X-ray diffraction pattern of a negative electrode sheet in Example 1-1.

## DETAILED EMBODIMENTS

The following clearly and completely describes the technical solutions in some embodiments of this application with reference to the accompanying drawings in some embodiments of this application. Apparently, the described embodiments are only some but not all of the embodiments of this application. All other embodiments obtained by persons skilled in the art based on this application shall fall within the protection scope of this application.

It should be noted that in specific embodiments of this application, an example in which a lithium-ion battery is used as a secondary battery is used to illustrate this application. However, the secondary battery of this application is not limited to the lithium-ion battery.

To increase energy density, negative electrode sheets are generally required to have high compacted density. However, high compacted density results in low porosity and poor heat dissipation for negative electrode sheets containing natural graphite, affecting the temperature rise and rate performance of the secondary battery. Additionally, as a cycling progress, the compacted density further increases under the influence of internal stress from swelling, making electrolyte infiltration difficult, increasing temperature rise, and accelerating the degradation of cycle performance.

In view of this, according to a first aspect of this application, a negative electrode active material is provided, where a pressurized compacted density of a powder of the negative electrode active material is a g/cm$^3$, a pressure-released compacted density is b g/cm$^3$, and a pressure-release rebound rate is c, where $c = (a - b)/a \times 100\%$, and $1.5\% \leq c \leq 20\%$, preferably $5\% \leq c \leq 15\%$; and a and c satisfy: $c = k \times (a - 1)$, where $0.08 \leq k \leq 0.20$, preferably $0.15 \leq k \leq 0.20$, and a test load for the pressurized compacted density is 5 tons. For example, the value of c may be 1.5%, 3%, 5%, 8%, 10%, 12%, 14%, 15%, 18%, 20%, or within a range defined by any two of these values; and the value of k may be 0.08, 0.10, 0.12, 0.14, 0.15, 0.16, 0.18, 0.20, or within a range defined by any two of these values. By regulating the value of k within the above range and ensuring that a and c satisfy the above relationship, the negative electrode active material can maintain high porosity under high compacted density. Applying the negative electrode active material of this application to a secondary battery facilitates the infiltration of the electrolyte into the negative electrode sheet, enhances the diffusion rate of ions (for example, lithium ions), and improves the kinetic performance of the secondary battery, for example, rate performance. Additionally, higher porosity can improve the heat dissipation rate of the negative electrode sheet during a delithiation process, improve the heat dissipation performance of the negative electrode sheet, reduce the temperature rise of the secondary battery, thereby reducing the increase in impedance of the secondary battery during a cycling process and the decomposition of the SEI film on the surface of the negative electrode sheet, and improving the cycle performance of the secondary battery.

In some embodiments of this application, $1.2 \leq a \leq 2.0$. For example, the value of a may be 1.2, 1.3, 1.4, 1.5, 1.6, 1.7, 1.8, 1.9, 2.0, or within a range defined by any two of these values. By regulating the value of a within the above range, the negative electrode active material can have an appropriate pressure-release rebound rate. Applying the negative electrode active material to a secondary battery facilitates increasing the porosity of the negative electrode sheet and enhancing the infiltration of the electrolyte into the negative electrode sheet, thereby reducing the temperature rise of the secondary battery and improving the kinetic performance and cycle performance of the secondary battery.

In some embodiments of this application, $1.2 \leq b \leq 1.9$. For example, the value of b may be 1.2, 1.3, 1.4, 1.5, 1.6, 1.7, 1.8, 1.9, or within a range defined by any two of these values. By regulating the value of b within the above range, the negative electrode active material can have an appropriate pressure-release rebound rate. Applying the negative electrode active material to a secondary battery facilitates the infiltration of the electrolyte into the negative electrode sheet, mitigates the accumulation of internal stress in the negative electrode sheet, thereby reducing the temperature rise of the secondary battery and improving the kinetic performance and cycle performance of the secondary battery.

In some embodiments of this application, the negative electrode active material includes graphite with a hard carbon on its surface. It should be noted that "surface" herein may refer to the entire surface region of the graphite particles or a partial region of the surface of the graphite particles, which is not particularly limited in this application, provided that the objectives of this application can be achieved. The negative electrode active material with the above characteristics has good compression resistance. Graphite particles have high crystallinity, providing lithium storage sites. The hard carbon on the surface of graphite has lower crystallinity, which can improve the electronic conductivity of the negative electrode active material and increase the pores for electrolyte infiltration. Applying the negative electrode active material with the above characteristics to a secondary battery not only enables the secondary battery to have high energy density but also reduces the temperature rise of the secondary battery, improving the kinetic performance and cycle performance of the secondary battery.

In some embodiments of this application, the negative electrode active material satisfies $0.3 \leq I_d/I_g \leq 0.7$, where $I_d$ is the peak intensity of the d peak in the Raman spectrum of the negative electrode active material, and $I_g$ is the peak intensity of the g peak in the Raman spectrum of the negative electrode active material. For example, the value of $I_d/I_g$ may be 0.3, 0.4, 0.5, 0.6, 0.7, or within a range defined by any two of these values. The negative electrode active material with an $I_d/I_g$ value within the above range has an appropriate degree of surface defects, which facilitates achieving an appropriate pressure-release rebound rate, so that the negative electrode active material maintains a good pore structure with high porosity after cold pressing, thereby further enhancing the diffusion rate of lithium ions, improving the heat dissipation performance of the negative electrode sheet, reducing the temperature rise of the secondary battery, thus reducing the increase in impedance of the secondary battery during a cycling process and the decomposition of the SEI film on the surface of the negative electrode sheet, and better improving the kinetic performance and cycle performance of the secondary battery.

In some embodiments of this application, a powder OI value of the negative electrode active material is 2 to 5. For example, the powder OI value of the negative electrode active material may be 2, 2.5, 3, 3.5, 4, 4.5, 5, or within a range defined by any two of these values. By regulating the powder OI value of the negative electrode active material within the above range, the isotropy of the negative electrode active material can be improved, facilitating the diffusion of lithium ions. Applying the negative electrode active material with the above characteristics to a secondary battery can balance the kinetic performance and cycle performance of the secondary battery.

In some embodiments of this application, a graphitization degree G of the negative electrode active material is 90.5% to 98%. For example, the value of G may be 90.5%, 92%, 93%, 94%, 95%, 96%, 97%, 98%, or within a range defined by any two of these values. By regulating the graphitization degree of the negative electrode active material within the above range, it indicates that the surface of the negative electrode active material has a lower graphitization degree and lower crystallinity, which can improve the electronic conductivity of the negative electrode active material and increase the pores for electrolyte infiltration, thereby facilitating improving the kinetic performance and cycle performance of the secondary battery.

The method for preparing the negative electrode active material provided by this application includes, but is not limited to, the following steps: Graphite and a precursor are uniformly mixed, the mixture is placed in a reactor, and oxygen is introduced, where the precursor first melts and then undergoes a crosslinking reaction. The reacted sample is then cooled to room temperature, placed in a crucible, and carbonization treatment is performed under a nitrogen atmosphere. The carbonized product is sieved and demagnetized to obtain the negative electrode active material. The negative electrode active material includes graphite with a hard carbon on its surface. For example, the material of the precursor may include, but is not limited to, at least one of phenolic resin, epoxy resin, furan resin, acrylonitrile-butadienestyrene copolymer (ABS resin), coal-based pitch, polyacrylonitrile, polypropylene, citric acid, or sucrose.

Graphite is not particularly limited in this application, provided that the objectives of this application can be achieved. For example, graphite may be natural graphite. Particle size Dv50 of graphite is not particularly limited in this application, provided that the objectives of this application can be achieved. For example, the particle size Dv50 of graphite may be from 6 $\mu$m to 23 $\mu$m. Dv50 is a particle size of a material where the cumulative distribution by volume reaches 50% as counted from the small particle size side. The purity of graphite is not particularly limited in this application, provided that the objectives of this application can be achieved. For example, the purity of graphite may be from 90% to 99.99%. The coking value of the precursor is not particularly limited in this application, provided that the objectives of this application can be achieved. For example, the coking value of the precursor may be from 20% to 80%. The mass ratio of graphite to precursor is not particularly limited in this application, provided that the objectives of this application can be achieved. For example, the mass ratio m:n of graphite to precursor may be from 90:10 to 98:2. The conditions for the melting and crosslinking reactions are not particularly limited in this application, provided that the objectives of this application can be achieved. For example, the temperature for the melting and crosslinking reactions may each independently be from 200°C to 800°C, and the reaction time may each independently be from 2 hours to 8 hours. The gas flow rate of the introduced oxygen is not particularly limited in this application, provided that the objectives of this application can be achieved. For example, the gas flow rate of oxygen may be from 2 L/min to 10 L/min. The conditions for the carbonization treatment are not particularly limited in this application, provided that the objectives of this application can be achieved. For example, the temperature for the carbonization treatment may be from 800°C to 1300°C, and the reaction time may be from 12 hours to 20 hours. The methods for sieving and demagnetization are not particularly limited in this application, which can be selected according to actual needs, provided that the objectives of this application can be achieved. For example, sieving may be performed using a double-layer vibrating sieve, and demagnetization may be performed using an automatic powder demagnetizer. The mesh size of the sieve is not particularly limited in this application, which can be selected according to actual needs, for example, a sieve with a mesh size of 300 to 400 may be selected.

Generally, the values of the pressure-release rebound rate c and k can be adjusted by regulating the particle size Dv50 of graphite, the mass ratio m:n of graphite to precursor, the coking value of the precursor, the temperature and time of the crosslinking reaction, and the temperature and time of the carbonization treatment. As the particle size Dv50 of graphite increases, c decreases, and k decreases; and as the particle size Dv50 of graphite decreases, c increases, and k increases. As the ratio m:n increases, c decreases, and k decreases; and as the ratio m:n decreases, c increases, and k increases. As the coking value of the precursor increases, c increases, and k increases; and as the coking value of the precursor decreases, c decreases, and k decreases. As the temperature of the crosslinking reaction increases, c increases, and k increases; and as the temperature of the crosslinking reaction decreases, c decreases, and k decreases. As the time of the crosslinking reaction extends, c increases, and k increases; and as the time of the crosslinking reaction shortens, c decreases, and k decreases. As the temperature of the carbonization treatment increases, c increases, and k increases; and as the temperature of the carbonization treatment decreases, c decreases, and k decreases. As the time of the carbonization treatment extends, c decreases, and k decreases; and as the time of the carbonization treatment shortens, c increases, and k increases.

According to a second aspect of this application, a secondary battery is provided, including a positive electrode sheet, a negative electrode sheet, and an electrolyte, where the negative electrode sheet includes a negative electrode current collector and a negative electrode active material layer disposed on at least one surface of the negative electrode current collector, the negative electrode active material layer including the negative electrode active material provided in the first aspect of this application. Applying the negative electrode active material of this application to the negative electrode sheet enables the negative electrode sheet to have a higher porosity and good heat dissipation performance, thereby reducing the temperature rise of the secondary battery and improving the kinetic performance and cycle performance of the secondary battery.

In some embodiments of this application, the compacted density of the negative electrode sheet is q g/cm$^3$, the porosity of the negative electrode sheet is p, and q and p satisfy $p = -0.37 \times q + h$, where $0.8 \leq h \leq 1.0$; and $1.2 \leq q \leq 1.9$, and $10\% \leq p \leq 60\%$. For example, the value of h may be 0.8, 0.83, 0.85, 0.88, 0.9, 0.92, 0.95, 0.98, 1.0, or within a range defined by any two of these values; the value of q may be 1.2, 1.3, 1.4, 1.5, 1.6, 1.7, 1.8, 1.9, or within a range defined by any two of these values; and the value of p may be 10%, 20%, 25%, 30%, 35%, 40%, 45%, 50%, 60%, or within a range defined by any two of these values. The negative electrode sheet with the above characteristics has a higher compacted density and higher porosity, with good heat dissipation performance. Applying the negative electrode sheet to a secondary battery can reduce the temperature rise of the secondary battery and improve the kinetic performance and cycle performance of the secondary battery.

The method for regulating the compacted density of the negative electrode sheet is not particularly limited in this application, provided that the objectives of this application can be achieved. For example, the compacted density of the negative electrode sheet can be regulated by adjusting the cold pressing pressure. Generally, increasing the cold pressing pressure increases the compacted density of the negative electrode sheet, while decreasing the cold pressing pressure decreases the compacted density of the negative electrode sheet.

In some embodiments of this application, the OI value of the negative electrode sheet ranges from 8 to 30. For example, the OI value of the negative electrode sheet may be 8, 9, 10, 13, 15, 18, 20, 22, 25, 28, 30, or within a range defined by any two of these values. The negative electrode sheet with an OI value within the above range has good ion diffusion performance. Applying the negative electrode sheet to a secondary battery facilitates reducing the temperature rise of the secondary battery and improving the kinetic performance and cycle performance of the secondary battery.

In some embodiments of this application, the negative electrode sheet satisfies $0.3 \leq I_d'/I_g' \leq 0.8$, where $I_d'$ is the peak intensity of the d peak in the Raman spectrum of the negative electrode sheet in a $100\ \mu m \times 100\ \mu m$ region, and $I_g'$ is the peak intensity of the g peak in the Raman spectrum of the negative electrode sheet in a $100\ \mu m \times 100\ \mu m$ region. For example, the value of $I_d'/I_g'$ may be 0.3, 0.35, 0.4, 0.45, 0.5, 0.6, 0.7, 0.75, 0.8, or within a range defined by any two of these values. The negative electrode sheet with an $I_d'/I_g'$ value within the above range has good electronic conductivity. Applying the negative electrode sheet to a secondary battery can improve the kinetic performance and cycle performance of the secondary battery.

The negative electrode current collector is not particularly limited in this application, provided that the objectives of this application can be achieved. For example, the negative electrode current collector may include copper foil, aluminum foil, nickel foil, stainless steel foil, titanium foil, nickel foam, copper foam, or a polymer substrate coated with conductive metal. The conductive metal includes, but is not limited to, copper, nickel, or titanium, and the material of the polymer substrate includes, but is not limited to, at least one of polyethylene, polypropylene, ethylene-propylene copolymer, polyethylene terephthalate, polyethylene naphthalate, or poly(p-phenylene terephthalamide). The thicknesses of the negative electrode current collector and the negative electrode active material layer are not particularly limited in this application, provided that the objectives of this application can be achieved. For example, the thickness of the negative electrode current collector may be from 4 $\mu m$ to 12 $\mu m$, and the thickness of a single-sided negative electrode active material layer may be from 30 $\mu m$ to 160 $\mu m$. In this application, the negative electrode active material layer may be disposed on one or two surfaces of the negative electrode current collector in a thickness direction of the negative electrode current. It should be noted that the "surface" herein may be an entire region of the negative electrode current collector, or may be a partial region of the negative electrode current collector. This is not particularly limited in this application, provided that the objectives of this application can be achieved. Optionally, the negative electrode active material includes a thickener, and the thickener may include, but is not limited to, sodium carboxymethyl cellulose. The negative electrode active material layer of this application may further include a conductive agent and a binder.

The negative electrode active material layer of this application may further include a binder or a thickener. The types of the binder and the thickener are not particularly limited in this application, provided that the objectives of this application can be achieved. For example, the binder may include, but is not limited to, at least one of polypropylene glyco, sodium polyacrylate, potassium polyacrylate, lithium polyacrylate, polyimide, hydroxypropyl cellulose, diacetyl cellulose, polyvinyl chloride, carboxylated polyvinyl chloride, polyvinylpyrrolidone, polyethylene, polypropylene, epoxy resin, nylon, styrene-butadiene rubber, polyvinyl alcohol, polyvinylidene fluoride, polytetrafluoroethylene, polyvinyl butyral, water-based acrylic resin, carboxymethyl cellulose, or sodium carboxymethyl cellulose. The thickener may include, but is not limited to, carboxymethyl cellulose or sodium carboxymethyl cellulose. In some embodiments, the negative electrode sheet of this application does not contain a conductive agent, such as acetylene black, Ketjen black, carbon nanotubes (CNTs), carbon fibers, carbon dots, or graphene.

The positive electrode sheet is not particularly limited in this application, provided that the objectives of this application can be achieved. For example, the positive electrode sheet includes a positive electrode current collector and a positive electrode active material layer disposed on at least one surface of the positive electrode current collector. The positive electrode current collector is not particularly limited in this application, provided that the objectives of this application can be achieved. For example, the positive electrode current collector may include a metal foil or a composite current collector. For example, the metal foil may be aluminum foil. The composite current collector may include a polymer material matrix and a metal material layer disposed on at least one surface of the polymer material matrix. The material of the metal material layer may include at least one of aluminum, aluminum alloy, nickel, nickel alloy, titanium, titanium alloy, silver, or silver alloy. The polymer material matrix may include at least one of polypropylene, polyethylene terephthalate, polybutylene terephthalate, polystyrene, or polyethylene. The positive electrode active material layer of this application includes a positive electrode active material. The type of the positive electrode active material is not particularly limited in this application, provided that the objectives of this application can be achieved. For example, the positive electrode active material may include at least one of lithium cobaltate, lithium nickel cobalt manganese oxide ($LiNi_{0.90}Co_{0.05}Mn_{0.05}O_2$ (NCM955), NCM811, NCM622, NCM523, and NCM111), lithium nickel manganese aluminate, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel-type lithium manganate, spinel-type lithium nickel manganate, or lithium titanate.

The thicknesses of the positive electrode current collector and the positive electrode active material layer are not particularly limited in this application, provided that the objective of this application can be achieved. For example, the thickness of the positive electrode current collector may be from 5 $\mu$m to 20 $\mu$m. The thickness of a single-sided positive electrode active material layer may be from 30 $\mu$m to 150 $\mu$m. In this application, the positive electrode active material layer may be disposed on one or two surfaces of the positive electrode current collector in a thickness direction of the positive electrode current collector. It should be noted that the "surface" herein may be an entire region or a partial region of the surface of the positive electrode current collector. This is not particularly limited in this application, provided that the objectives of this application can be achieved. The positive electrode active material layer of this application may further include the above binder. The positive electrode active material layer of this application may further include a conductive agent. The conductive agent is not particularly limited in this application, provided that the objective of this application can be achieved. For example, the conductive agent may include at least one of acetylene black, Ketjen black, carbon nanotubes, carbon fibers, carbon dots, or graphene.

In this application, the electrolyte includes a lithium salt and an organic solvent. The lithium salt may include, but is not limited to, at least one of lithium hexafluorophosphate (LiPF$_6$), lithium tetrafluoroborate (LiBF$_4$), lithium difluorophosphate (LiPO$_2$F$_2$), lithium bis(trifluoromethanesulfonyl)imide (LiTFSI), lithium bis(fluorosulfonyl)imide (LiFSI), lithium bis(oxalate)borate (LiBOB), or lithium difluoro(oxalate)borate (LiDFOB). The concentration of the lithium salt in the electrolyte is not particularly limited in this application, provided that the objective of this application can be achieved. The organic solvent is not particularly limited in this application, provided that the objective of this application can be achieved. For example, the organic solvent may include, but is not limited to, at least one of a carbonate compound, a carboxylate compound, an ether compound, or other organic solvents. The carbonate compound may include, but is not limited to, at least one of a linear carbonate compound or a cyclic carbonate compound. The linear carbonate compound may include, but is not limited to, at least one of dimethyl carbonate, diethyl carbonate, dipropyl carbonate, methyl propyl carbonate, ethyl propyl carbonate, or ethyl methyl carbonate. The cyclic carbonate compound may include, but is not limited to, at least one of ethylene carbonate, propylene carbonate, butylene carbonate, or vinylethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, $\gamma$-butyrolactone, decanolide, valerolactone, or caprolactone. The ether compound may include, but is not limited to, at least one of dimethoxyethane, dibutyl ether, tetraethylene glycol dimethyl ether, diglyme, 1,2-dimethoxyethane, 1,2-diethoxyethane, 1-ethoxy-1-methoxyethane, 2-methyltetrahydrofuran, or tetrahydrofuran. The another organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. The electrolyte may further include an additive, and the additive may include, but is not limited to, at least one of fluoroethylene carbonate, 1,3-propane sultone, or adiponitrile.

The secondary battery of this application further includes a separator for separating the positive electrode sheet from the negative electrode sheet, preventing internal short circuit inside the secondary battery, allowing electrolyte ions to pass through freely without affecting electrochemical charging and discharging processes. The separator is not particularly limited in this application, provided that the objective of this application can be achieved. For example, the material of the separator may include, but is not limited to, at least one of polyethylene, polypropylene, and polytetrafluoroethylene-based polyolefin separator, polyester film (for example, polyethylene terephthalate (PET) film), cellulose film, polyimide film, polyamide film, spandex film, or aramid film. The type of separator may include, but is not limited to, at least one of a woven film, a non-woven film (non-woven fabric), a microporous film, a composite film, a laminated film, or a spinning film. The separator of this application may have a porous structure. A porous layer is disposed on at least one surface of the separator, and the porous layer includes inorganic particles and a binder. The inorganic particles may include at least one of aluminum oxide, silicon oxide, magnesium oxide, titanium oxide, hafnium dioxide, tin oxide, cerium oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder may include at least one of polyvinylidene fluoride, a vinylidene fluoride-hexafluoropropylene copolymer, polyamide, polyacrylonitrile, polyacrylate, polyacrylic acid, polyacrylate salt, sodium carboxymethyl cellulose, polyvinylpyrrolidone, polyvinyl ether, polymethyl methacrylate, polytetrafluoroethylene, or polyhexafluoropropylene. A pore size of the porous structure is not particularly limited in this application, provided that the objectives of this application can be achieved. For example, the pore size may be from 0.01 $\mu$m to 1 $\mu$m. The thickness of the separator is not particularly limited in this application, provided that the objectives of this application can be achieved. For example, the thickness may be from 3 $\mu$m to 30 $\mu$m.

The secondary battery of this application further includes a packaging bag for accommodating the positive electrode sheet, the separator, the negative electrode sheet, the electrolyte, and other known components of the secondary battery in the art. The other components are not limited in this application. The packaging bag is not particularly limited in this application, which may be a well-known packaging bag in the art, provided that the objective of this application can be achieved. For example, an aluminum-plastic film packaging bag may be used.

The secondary battery of this application is not particularly limited, and may include any apparatus in which electrochemical reactions take place. In one embodiment of this application, the secondary battery may include, but is not limited to, a lithium-ion battery, a sodium-ion battery, a lithium polymer secondary battery, or a lithium-ion polymer secondary battery.

The preparation process of the secondary battery of this application is well known to persons skilled in the art, and is not particularly limited in this application. For example, the preparation process may include but is not limited to the following steps: the positive electrode sheet, the separator, and the negative electrode sheet are stacked in sequence, the resulting stack is subjected to operations such as winding and folding as required to obtain an electrode assembly of a wound structure, the electrode assembly is put into a packaging bag, an electrolyte is injected into the packaging bag, and then the packaging bag is sealed to obtain the secondary battery; alternatively, the positive electrode sheet, the separator, and the negative electrode sheet are stacked in sequence, four corners of the entire stacked structure are fixed with tapes to obtain an electrode assembly of a stacked structure, the electrode assembly is put into a packaging bag, an electrolyte is injected into the packaging bag, and then the packaging bag is sealed to obtain the secondary battery. In addition, if necessary, an overcurrent prevention element, a guide plate, and the like may be placed in the packaging bag as required, so as to prevent pressure increase, overcharge, and over-discharge in the secondary battery.

According to a third aspect of this application, an electronic apparatus is provided, including the secondary battery provided in the second aspect of this application. The secondary battery of this application has good cycle performance and kinetic performance, thereby enabling the electronic apparatus of this application to have a relatively long service life.

The electronic apparatus of this application is not particularly limited, and may be any electronic apparatus known in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, and a lithium-ion capacitor.

## Examples

The following describes some embodiments of this application more specifically by using examples and comparative examples. Various tests and evaluations were performed according to the following methods. In addition, unless otherwise specified, "part" and "%" are based on mass.

### Test methods and device:

### Method for sampling negative electrode sheet and negative electrode active material:

The lithium-ion battery was discharged to a voltage of 3.0 V at a constant current of 1C, then disassembled. The negative electrode sheet was removed and soaked in dimethyl carbonate (DMC) for 20 minutes, followed by sequential rinsing with DMC and acetone. Subsequently, the negative electrode sheet was placed in an oven and baked at 80°C for 12 hours to obtain a processed negative electrode sheet sample. The negative electrode sheet samples used in the Raman test, X-ray diffraction (XRD) test, and porosity test were all sampled using the method described above.

The negative electrode active material layer was scraped off the negative electrode sheet using a scraper, and the scraped powder was thermally treated in a tubular furnace at 400°C for 4 hours under protection of argon to remove the binder adhered to the surface of the negative electrode active material, thereby obtaining the negative electrode active material powder sample. The negative electrode active material samples used in the compacted density test, Raman test, XRD test, and scanning electron microscope test of the powder were all sampled using the method described above.

### Test for powder compacted density

The compacted density of the powder was tested in accordance with the China National Standard GB/T 24533-2009 Graphite Negative Electrode Materials for Lithium-Ion Batteries. The specific testing steps were as follows: A sample of 1.0000 g $\pm$ 0.0500 g of the negative electrode active material powder was weighed and placed in a test mold (Carver 3619 13 mm mold). The sample was then placed in a powder compacted density tester (model: SUNS UTM7305) with a test load of 5 tons. The pressurized compacted density of the powder was denoted as a, the pressure-released compacted density was denoted as b, the mass of the negative electrode active material was denoted as m, the stressed area of the negative electrode active material was denoted as S, the thickness of the powder sample under pressure was denoted as $H_a$, and the thickness of the powder sample when pressure is released was denoted as $H_b$. The formulas for calculating a and b were formulas as follows: $a = m / (S \times H_a)$, and $b = m / (S \times H_b)$.

### Raman test

The Raman spectrum of the negative electrode active material was tested using a laser microscope confocal Raman spectrometer (model: HR Evolution, manufacturer: HORIBA, France), with the laser wavelength of the Raman spectrometer ranging from 532 nm to 633 nm. The powder of the negative electrode active material was tested by scanning a region of 100 $\mu$m × 100 $\mu$m, with 100 points tested at equal intervals within this region, each point tested within a range of 0.02 cm$^{-1}$ to 0.05 cm$^{-1}$. The peak appearing between 1300 cm$^{-1}$ and 1400 cm$^{-1}$ was recorded as the d peak, and the peak appearing between 1500 cm$^{-1}$ and 1600 cm$^{-1}$ was recorded as the g peak. Lab Spec software was used to process the data to obtain the peak intensities of the d peak and g peak, denoted as $I_d$ and $I_g$, respectively. The intensity ratio $I_d/I_g$ was calculated for each point, and the average value of the 100 points was taken as the final $I_d/I_g$ intensity ratio.

The negative electrode sheet sample was tested using the method described above to obtain the intensity ratio of $I_d'/I_g'$.

### X-ray diffraction (XRD) test (graphitization degree test)

The XRD test was conducted in accordance with the International Standard JJS K 0131-1996 General Rules for X-ray Diffraction Analysis, using an X-ray diffractometer (model: Bruker D8 ADVANCE) with Cu K$\alpha$ radiation, a voltage of 40 kV, a current of 40 mA, a test angle from 52° to 58°, and a step time of 0.3 s. An XRD pattern of the negative electrode active material powder was processed to obtain an interlayer spacing $d_{002}$ at the 002 peak position of the negative electrode active material powder. A silicon standard with a C:Si = 5:1 (mass ratio) was used as a reference sample for scanning tests, and the graphitization degree G of the negative electrode active material was calculated using the following formula:

$$G = (3.44 - d_{002}) / (3.440 - 3.354) \times 100\%.$$

### X-ray diffraction (XRD) test (OI value test)

The XRD test was conducted in accordance with the International Standard JJS K 0131-1996 General Rules for X-ray Diffraction Analysis, using an X-ray diffractometer (model: Bruker D8 ADVANCE) with Cu K$\alpha$ radiation, a voltage of 40 kV, a current of 40 mA, a test angle from 20° to 80°, and a step time of 0.3 s. The negative electrode active material powder and negative electrode sheet were scanned to obtain their respective XRD patterns, and a peak area C(004) of the (004) crystal plane diffraction peak and a peak area C(110) of the (110) crystal plane diffraction peak were analyzed. The ratio of C(004) / C(110) was calculated to obtain an OI value of the negative electrode active material and an OI value of the negative electrode sheet, respectively.

### Scanning electron microscope (SEM) test

The morphology and structure of the negative electrode active material sample was analyzed using a JSM-6360LV scanning electron microscope from JEOL and its accompanying X-ray energy spectrometer. The morphological characteristics of the sample were observed, and scanning electron microscope images were taken.

### Electrode sheet porosity test

The negative electrode sheet sample obtained by the sampling method described above was prepared into discs with a diameter of 10 mm, with 30 samples tested for each example or comparative example. The porosity of the negative electrode active material layer was tested in accordance with the National Standard GB/T 24586-2009 Measurement of Iron Ore Apparent Density, True Density and Porosity, using an AccuPyc II 1340 true density analyzer with helium as the test gas.

### Temperature Rise Test

The lithium-ion battery was wrapped with thermal insulation cotton, with a temperature sensor attached to the center. A multi-channel temperature recorder was used to collect data every 1 s to continuously monitor the surface discharge temperature rise of the lithium-ion battery. The lithium-ion battery was placed in a 25°C constant temperature chamber for 30 min, charged to 4.25 V at a constant current of 2C at a test temperature of 25°C, then discharged to 3 V at 10C, and this charge/discharge process was repeated for 3 cycles. The highest temperature rise at the end of the 10C discharge of the multi-channel temperature recorder was recorded as $T_{max}$°C, and the 10C discharge temperature rise was recorded as T°C, and therefore, T = $T_{max}$ - 25.

**Rate Performance Test**

At a temperature of 25°C, the lithium-ion battery was charged to 4.25 V at a constant current of 0.2C, then charged at a constant voltage of 4.25 V until the current reached 0.05C. The lithium-ion battery was left standing for 5 minutes, and then discharged to 3 V at a rate of 0.2C to obtain the 0.2C discharge capacity. The lithium-ion battery was then charged again to 4.25 V at a constant current of 0.2C, charged at a constant voltage of 4.25 V until the current reached 0.05C. The lithium-ion battery was left standing for 30 minutes, and then discharged to 3 V at a rate of 10C to obtain the 10C discharge capacity. The 10C/0.2C rate performance of the lithium-ion battery was calculated as 10C discharge capacity / 0.2C discharge capacity $\times$ 100%.

**Cycle performance test**

The lithium-ion battery was left standing for 30 minutes in a constant temperature chamber at 25°C $\pm$ 1°C. The cycling process was as follows: The lithium-ion battery was charged to 4.25 V at a constant current of 2C, then charged at a constant voltage of 4.25 V until the current reached 0.05C. The lithium-ion battery was left standing for 15 minutes, and then discharged to 3 V at a rate of 10C. The lithium-ion battery was left standing for 30 minutes. This was a charge-discharge cycle. The initial cycle discharge capacity $C_0$ of the lithium-ion battery was recorded. Subsequently, 800 cycles were performed according to the above cycling process, with a low-rate capacity recovery performed at the 50th, 100th, and every 100 cycles from the 101st to the 800th cycle. The low-rate capacity recovery charge-discharge process was as follows: The lithium-ion battery was left standing for 30 minutes in a constant temperature chamber at 25°C $\pm$ 1°C, charged to 4.25 V at a constant current of 2C, then charged at a constant voltage of 4.25 V until the current reached 0.05C. The lithium-ion battery was left standing for 15 minutes, and then discharged to 3 V at a rate of 0.2C. The lithium-ion battery was left standing for 30 minutes. The cycle discharge capacity $C_1$ at the 800th cycle was recorded, and the 800-cycle capacity retention rate was calculated as $C_1$ / $C_0$ $\times$ 100%.

**Example 1-1**

<Preparation of negative electrode active material>

Natural graphite (particle size of 10 $\mu$m, and purity of 99.9%) and precursor phenolic resin (coking value of 48%) were mixed uniformly at a mass ratio of m:n = 93:7. The mixture was then placed in a vertical reactor. Oxygen was introduced at a flow rate of 5 L/min, and high-temperature treatment was performed at $T_1$ = 550°C for 4 hours. The thermally treated sample was cooled to room temperature, placed in a crucible, and carbonized in a roller kiln under a nitrogen atmosphere at $T_2$ = 1150°C for 15 hours. The sample was then cooled to room temperature, sieved through a double-layer 350-mesh vibrating sieve, and demagnetized using an automatic powder demagnetizer to obtain the negative electrode active material.

<Preparation of negative electrode sheet>

The negative electrode active material obtained above, binder styrene-butadiene rubber (SBR), and thickener sodium carboxymethyl cellulose (CMC-Na) were mixed at a mass ratio of 97.4:1.2:1.4. Deionized water was added as a solvent and stirred uniformly to prepare a negative electrode slurry with a solid content of 40 wt%. The negative electrode slurry was evenly applied onto one surface of the negative electrode current collector copper foil with a thickness of 6 $\mu$m and dried at 85°C for 4 hours to obtain a negative electrode sheet having a single surface coated with a negative electrode active material layer with a thickness of 80 $\mu$m. After cold pressing (cold pressing tonnage of 15 tons), cutting, and slitting, the product was dried under vacuum at 120°C for 12 hours to obtain the negative electrode sheet with specifications of 76.6 mm $\times$ 875 mm.

<Preparation of positive electrode sheet>

The positive electrode active material lithium nickel cobalt manganese oxide (NCM811), conductive agent acetylene black, and binder polyvinylidene fluoride (PVDF) were mixed at a mass ratio of 96.3:2.2:1.5. N-methylpyrrolidone (NMP) was added as a solvent and stirred uniformly to prepare a positive electrode slurry with a solid content of 72 wt%. The positive electrode slurry was evenly applied onto one surface of a positive electrode current collector aluminum foil with a thickness of 13 $\mu$m and dried at 85°C to obtain a positive electrode sheet having a single surface coated with a positive electrode active material layer with a thickness of 130 $\mu$m. After cold pressing, cutting, and slitting, the product was dried under vacuum at 85°C for 4 hours to obtain the positive electrode sheet with specifications of 74 mm $\times$ 867 mm.

<Preparation of electrolyte>

In a dry argon atmosphere glove box, the base solvents ethylene carbonate (EC), propylene carbonate (PC), ethyl methyl carbonate (EMC), and diethyl carbonate (DEC) were mixed at a mass ratio of EC:PC:EMC:DEC = 1:3:3:3. Fluoroethylene carbonate and 1,3-propane sultone were added, dissolved, and stirred uniformly, followed by the addition of lithium salt $LiPF_6$. The mixture was stirred uniformly to obtain the electrolyte. Based on the mass of the electrolyte, the mass percentage of the lithium salt was 12.5%, the mass percentage of fluoroethylene carbonate was 2%, the mass percentage of 1,3-propane sultone was 2%, and the remainder was the base solvent.

<Separator>

A polyethylene film (provided by Celgard) with a thickness of 7 $\mu$m was used as the separator.

<Preparation of lithium-ion battery>

The prepared positive electrode sheet, the separator, and the negative electrode sheet prepared above were stacked in sequence, so that the separator was disposed between the positive electrode sheet and the negative electrode sheet for separation, and then a resulting stack was wound to obtain an electrode assembly. After tabs were welded, the electrode assembly was placed in an aluminum-plastic film packaging bag and dried in a vacuum oven at 80°C for 12 hours to remove moisture. The prepared electrolyte was injected, followed by processes such as vacuum sealing, standing, formation (at 45°C, constant current charging at 0.1C, cutoff time 1800 s, then constant current charging to 4.25 V at 0.5C), degassing, and trimming to obtain the lithium-ion battery.

**Examples 1-2 to 1-9**

These examples were the same as Example 1-1, except that the related preparation parameters were adjusted according to Table 1.

**Examples 2-1 to 2-8**

These examples were the same as Example 1-1, except that the related preparation parameters were adjusted according to Table 2.

**Comparative Examples 1-1 to 1-4**

These comparative examples were the same as Example 1-1, except that the related preparation parameters were adjusted according to Table 1.

**Comparative Example 1-5**

The comparative example was the same as Example 1-1, except that natural graphite (particle size of 10 $\mu$m, and purity of 99.9%) was used as the negative electrode active material and that the related preparation parameters were adjusted according to Table 1.

The relevant parameters and performance test results for each example and comparative example are shown in Tables 1 and 2.

**Table 1**

| | m:n | Precursor | $T_1$ (°C) | a (g/cm³) | b (g/cm³) | c | k | $I_d/I_g$ | Powder OI value of negative electrode active material | G (%) | 10C temperature rise T (°C) | 10C/0.2C rate performance (%) | 800-cycle capacity retention rate (%) |
|---|---|---|---|---|---|---|---|---|---|---|---|---|---|
| Example 1-1 | 93:7 | Phenolic resin | 550 | 1.60 | 1.42 | 11.3% | 0.188 | 0.44 | 4.0 | 96.2 | 37.1 | 90.8 | 90.5 |
| Example 1-2 | 90:10 | Phenolic resin | 400 | 1.50 | 1.35 | 10.0% | 0.200 | 0.65 | 2.6 | 92.4 | 35.9 | 91.6 | 91.1 |
| Example 1-3 | 98:2 | Phenolic resin | 300 | 1.40 | 1.30 | 7.1% | 0.178 | 0.32 | 4.8 | 97.7 | 34.5 | 92.2 | 91.5 |
| Example 1-4 | 95:5 | Phenolic resin | 700 | 1.30 | 1.24 | 4.6% | 0.153 | 0.55 | 3.2 | 93.9 | 39.2 | 90.1 | 87.8 |
| Example 1-5 | 90:10 | Coal-series pitch | 300 | 1.20 | 1.16 | 3.3% | 0.165 | 0.68 | 2.6 | 92.5 | 41.7 | 87.5 | 85.7 |
| Example 1-6 | 98:2 | Coal-series pitch | 800 | 1.70 | 1.47 | 13.5% | 0.193 | 0.37 | 4.5 | 97.4 | 38.6 | 90.5 | 89.9 |
| Example 1-7 | 90:10 | Polyacrylonitrile | 600 | 1.80 | 1.53 | 15.0% | 0.188 | 0.48 | 3.6 | 93.8 | 40.0 | 89.4 | 88.4 |
| Example 1-8 | 90:10 | Sucrose | 600 | 1.90 | 1.57 | 17.4% | 0.193 | 0.48 | 3.1 | 93.5 | 42.2 | 88.2 | 86.1 |
| Example 1-9 | 90:10 | Citric acid | 600 | 2.00 | 1.60 | 20.0% | 0.200 | 0.48 | 3.4 | 93.3 | 43.9 | 86.6 | 83.4 |
| Comparative Example 1-1 | 85:15 | Phenolic resin | 1000 | 1.60 | 1.55 | 3.1% | 0.052 | 0.18 | 3.7 | 95.4 | 58.2 | 73.8 | 74.4 |
| Comparative Example 1-2 | 88:12 | Coal-series pitch | 900 | 1.50 | 1.47 | 2.0% | 0.040 | 0.28 | 1.7 | 90.2 | 56.9 | 76.2 | 63.2 |
| Comparative Example 1-3 | 99:1 | Polyacrylonitrile | 200 | 1.70 | 1.63 | 4.1% | 0.059 | 0.12 | 5.3 | 98.7 | 62.5 | 53.5 | 50.8 |
| Comparative Example 1-4 | 99:1 | Coal-series pitch | 200 | 1.80 | 1.70 | 5.6% | 0.070 | 0.08 | 5.7 | 98.9 | 67.7 | 5.2 | 11.2 |
| Comparative Example 1-5 | / | / | / | 1.60 | 1.58 | 1.3% | 0.022 | 0.06 | 5.6 | 98.8 | 68.5 | 48.2 | 48.7 |

Note: "/" in Table 1 indicates no relevant parameters. The coal-series pitch is high-temperature pitch 250 with a coking value of 70%, and the polyacrylonitrile has a weight-average molecular weight of 15,000 with a coking value of 30%.

Referring to Table 1, from Examples 1-1 to 1-9 and Comparative Examples 1-1 to 1-5, it can be seen that when the pressure-release rebound rate c of the negative electrode active material satisfies c = k × (a - 1), and when the value of k is within the range of this application, the lithium-ion battery exhibits lower temperature rise, higher 10C/0.2C rate performance, and higher 800-cycle capacity retention rate, indicating that the lithium-ion battery has lower temperature rise and better rate performance and cycle performance. When the value of k is not within the range of this application, the lithium-ion battery exhibits higher temperature rise, lower 10C/0.2C rate performance, and lower 800-cycle capacity retention rate. In particular, for the lithium-ion battery in Comparative Example 1-4, the temperature rise is excessive, the lithium-ion battery cannot perform high-rate 10C discharge, with a 10C/0.2C rate performance of only 5.2%, and the capacity retention rate drops sharply to 11.2% after 530 cycles.

The values of a, b, $I_d/I_g$, the powder OI value of the negative electrode active material, and the graphitization degree G generally affect the temperature rise, rate performance, and cycle performance of the lithium-ion battery. From Examples 1-1 to 1-9, it can be seen that when the above parameters are within the range of this application, the lithium-ion battery exhibits lower temperature rise, higher 10C/0.2C rate performance, and higher 800-cycle capacity retention rate, indicating that the lithium-ion battery has lower temperature rise and good rate performance and cycle performance.

**Table 2**

| | Compacted density q of negative electrode sheet (g/cm$^3$) | Porosity p of negative electrode sheet | h | OI value of negative electrode sheet | $I_d'/I_g'$ | 10C temperature rise T (°C) | 10C/0.2C rate performance (%) | 800-cycle capacity retention rate (%) |
|---|---|---|---|---|---|---|---|---|
| Example 1-1 | 1.9 | 10.7% | 0.81 | 29.7 | 0.32 | 37.1 | 90.8 | 90.5 |
| Example 2-1 | 1.8 | 16.4% | 0.83 | 22.1 | 0.38 | 34.2 | 92.6 | 91.4 |
| Example 2-2 | 1.7 | 24.1% | 0.87 | 20.0 | 0.40 | 31.7 | 94.1 | 92.0 |
| Example 2-3 | 1.6 | 32.0% | 0.912 | 19.6 | 0.49 | 29.6 | 95.4 | 92.4 |
| Example 2-4 | 1.5 | 37.5% | 0.93 | 16.9 | 0.57 | 27.8 | 96.4 | 92.6 |
| Example 2-5 | 1.4 | 40.2% | 0.92 | 14.3 | 0.64 | 26.5 | 97.0 | 92.9 |
| Example 2-6 | 1.3 | 44.9% | 0.93 | 11.0 | 0.71 | 26.2 | 96.9 | 93.0 |
| Example 2-7 | 1.2 | 50.6% | 0.95 | 8.4 | 0.78 | 26.4 | 96.8 | 92.8 |
| Example 2-8 | 2.0 | 5.3% | 0.793 | 32.8 | 0.24 | 42.5 | 86.7 | 84.1 |
| Comparative Example 1-5 | 1.9 | 8.2% | 0.79 | 37.2 | 0.13 | 68.5 | 48.2 | 48.7 |

The values of q, p, h, the OI value of the negative electrode sheet, and $I_d'/I_g'$ typically affect the temperature rise, rate performance, and cycle performance of the lithium-ion battery. From Example 1-1, Examples 2-1 to 2-8, and Comparative Example 1-5, it can be seen that when the negative electrode active material of this application is applied to a lithium-ion battery and the above parameters are regulated within the range of this application, the lithium-ion battery exhibits lower temperature rise, higher 10C/0.2C rate performance, and higher 800-cycle capacity retention rate, indicating that the lithium-ion battery has lower temperature rise and good rate performance and cycle performance.

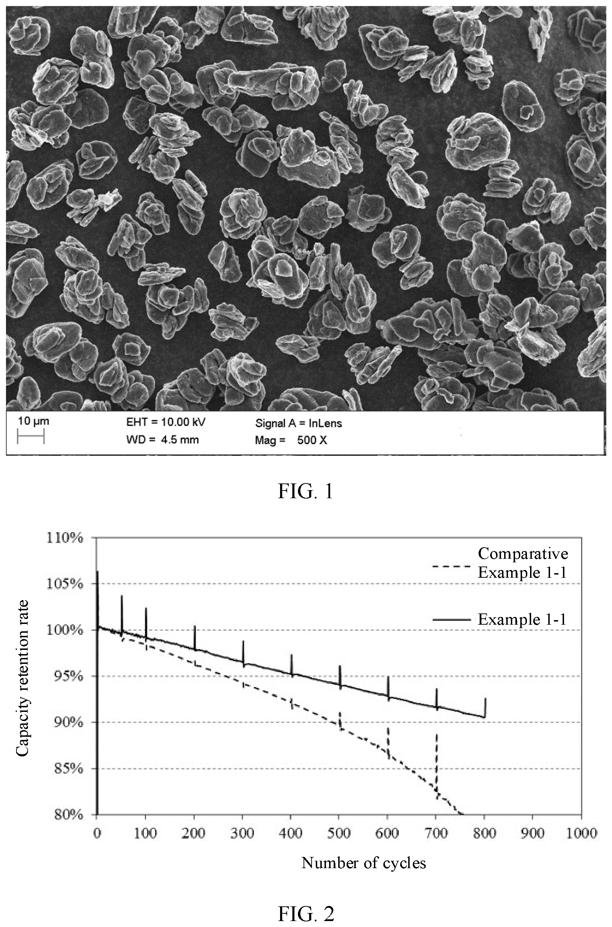

FIG. 1 shows an SEM image of the particle morphology of the negative electrode active material prepared in Example 1-1. From FIG. 1, it can be seen that the particle morphology of the negative electrode active material is a secondary particle structure, with secondary particles composed of primary particles. The secondary particles have relatively uniform particle size and rounded morphology. The inventors speculate that particles of the negative electrode active material with the above morphology can enhance the isotropy of the negative electrode active material, facilitating the transmission of active ions.

FIG. 2 shows a comparison diagram of the 800-cycle performance of lithium-ion batteries in Example 1-1 and Comparative Example 1-1. From FIG. 2, it can be seen that the lithium-ion battery in Example 1-1 exhibits slower cycle capacity decay, with a capacity retention rate of up to 90.5% after 800 cycles. In contrast, the lithium-ion battery in Comparative Example 1-1 exhibits faster cycle capacity decay, with a capacity retention rate below 80% after 750 cycles. This indicates that the lithium-ion battery in Example 1-1 of this application has better cycle performance.

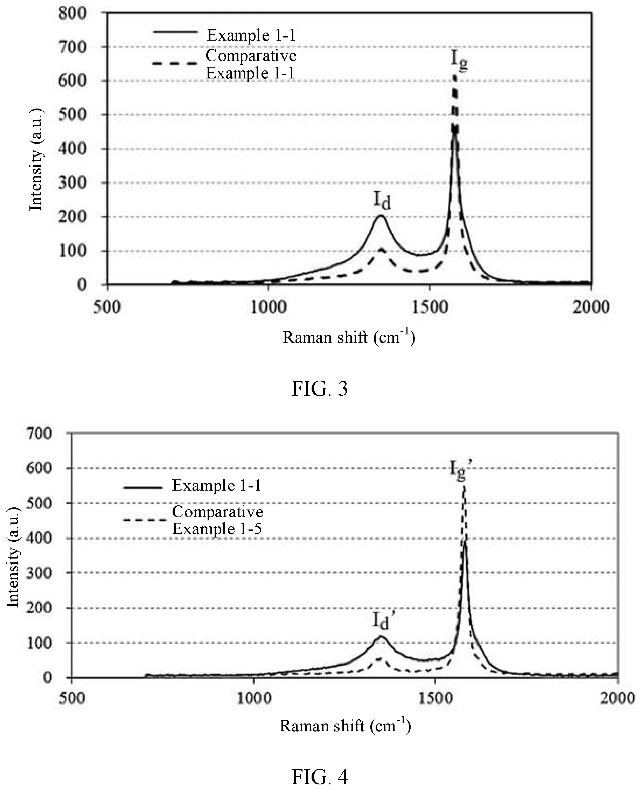

FIG. 3 shows the Raman spectra of the negative electrode active materials prepared in Example 1-1 and Comparative Example 1-1. From FIG. 3, it can be seen that $I_d$ value of the negative electrode active material in Example 1-1 is 206.1, and $I_g$ value is 466.8, so $I_d/I_g = 0.44$. $I_d$ value of the negative electrode active material in Comparative Example 1-1 is 108.6, and $I_g$ is 602.2, so $I_d/I_g = 0.18$.

FIG. 4 shows the Raman spectra of the negative electrode sheets in Example 1-1 and Comparative Example 1-5. From FIG. 4, it can be seen that $I_d'$ value of the negative electrode sheet in Example 1-1 is 124.8, and $I_g'$ is 390.7, so $I_d'/I_g' = 0.32$. $I_d'$ value of the negative electrode active material in Comparative Example 1-5 is 70.9, and $I_g'$ value is 548.7, so $I_d'/I_g' = 0.13$. The higher $I_d'/I_g'$ value for the negative electrode sheet, the higher electron conduction rates, indicating that the lithium-ion battery in Example 1-1 of this application has better electronic conductivity.

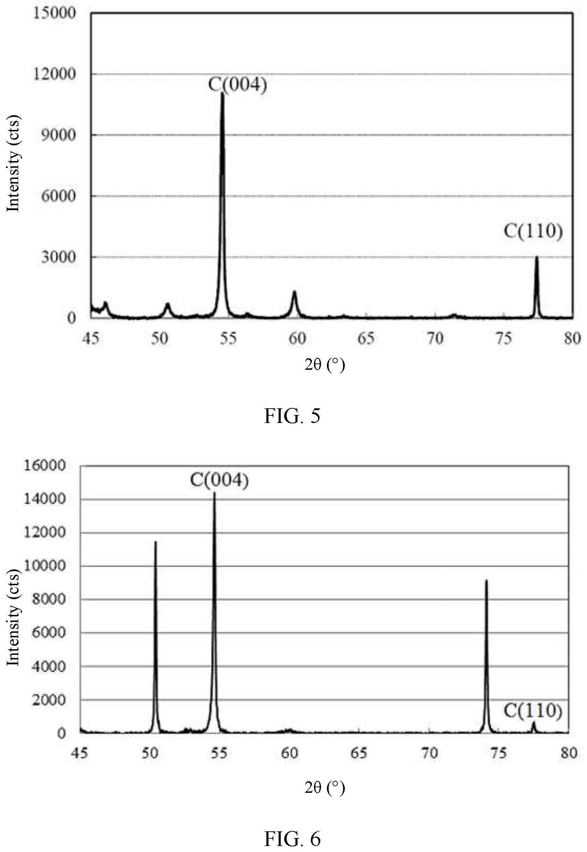

FIG. 5 shows the X-ray diffraction pattern of the negative electrode active material prepared in Example 1-1. From FIG. 5, it can be seen that the negative electrode active material prepared in Example 1-1 exhibits a C(004) crystal plane diffraction peak at $2\theta = 54.56°$, with a peak area of 2724.8, and a C(110) crystal plane diffraction peak at $2\theta = 77.40°$, with a peak area of 681.20, resulting in a powder OI value of the negative electrode active material of C(004) / C(110) = 4.0.

FIG. 6 shows the X-ray diffraction pattern of the negative electrode sheet in Example 1-1. From FIG. 6, it can be seen that the negative electrode sheet in Example 1-1 exhibits a C(004) crystal plane diffraction peak at 54.64°, with a peak area of 5089.3, and a C(110) crystal plane diffraction peak at 77.50°, with a peak area of 171.3, resulting in an OI value of the negative electrode sheet of C(004) / C(110) = 29.7.

It should be noted that in this specification, the terms "include", "comprise", or any of their variants are intended to cover a non-exclusive inclusion, such that a process, method, article, or device that includes a series of elements includes not only those elements but also other elements that are not expressly listed, or further includes elements inherent to such process, method, article, or device.

All embodiments in this specification are described in a related manner. For a part that is the same or similar between some embodiments, reference may be made between some embodiments. Each embodiment focuses on differences from other embodiments.

**Claims**

1. A negative electrode active material, wherein a pressurized compacted density of a powder of the negative electrode active material is a $g/cm^3$, a pressure-released compacted density is b $g/cm^3$, and a pressure-release rebound rate is c, wherein $c = (a - b) / a \times 100\%$, and $1.5\% \leq c \leq 20\%$; and a and c satisfy: $c = k \times (a - 1)$, wherein $0.08 \leq k \leq 0.20$, and a test load for the pressurized compacted density is 5 tons.

2. The negative electrode active material according to claim 1, wherein $5\% \leq c \leq 15\%$, and $0.15 \leq k \leq 0.20$.

3. The negative electrode active material according to claim 1 or 2, wherein $1.2 \leq a \leq 2.0$.

4. The negative electrode active material according to any one of claims 1 to 3, wherein $1.2 \leq b \leq 1.9$.

5. The negative electrode active material according to any one of claims 1 to 4, wherein the negative electrode active material comprises graphite with a surface having a hard carbon.

6. The negative electrode active material according to any one of claims 1 to 5, wherein the negative electrode active material satisfies $0.3 \leq I_d/I_g \leq 0.7$, $I_d$ being a peak intensity of a d peak in a Raman spectrum of the negative electrode active material, and $I_g$ being a peak intensity of a g peak in the Raman spectrum of the negative electrode active material.

7. The negative electrode active material according to any one of claims 1 to 6, wherein a powder OI value of the negative electrode active material is 2 to 5.

8. The negative electrode active material according to any one of claims 1 to 7, wherein a graphitization degree G of the negative electrode active material is 90.5% to 98%.

9. A secondary battery, comprising a positive electrode sheet, a negative electrode sheet, and an electrolyte; wherein the negative electrode sheet comprises a negative electrode current collector and a negative electrode active material layer disposed on at least one surface of the negative electrode current collector; the negative electrode active material layer comprising the negative electrode active material according to any one of claims 1 to 8.

10. The secondary battery according to claim 9, wherein a compacted density of the negative electrode sheet is q $g/cm^3$, and a porosity of the negative electrode sheet is p, and q and p satisfy $p = -0.37 \times q + h$, wherein $0.8 \leq h \leq 1.0$; and $1.2 \leq q$

$\leq 1.9$, and $10\% \leq p \leq 60\%$.

**11.** The secondary battery according to claim 9 or 10, wherein an OI value of the negative electrode sheet ranges from 8 to 30.

**12.** The secondary battery according to any one of claims 9 to 11, wherein the negative electrode sheet satisfies $0.3 \leq I_d'/I_g'$ $\leq 0.8$, $I_d'$ being a peak intensity of a d peak in a Raman spectrum of the negative electrode sheet in a 100 $\mu$m $\times$ 100 $\mu$m region, and $I_g'$ being a peak intensity of a g peak in the Raman spectrum of the negative electrode sheet in a 100 $\mu$m $\times$ 100 $\mu$m region.

**13.** An electronic apparatus, comprising the secondary battery according to any one of claims 9 to 12.

FIG. 1

FIG. 2

FIG. 3

FIG. 4

FIG. 5

FIG. 6

## INTERNATIONAL SEARCH REPORT

| International application No. |
| --- |
| **PCT/CN2024/105939** |

| A. | CLASSIFICATION OF SUBJECT MATTER |
| --- | --- |

H01M4/36(2006.01)i; H01M4/587(2010.01)i; H01M4/133(2010.01)i; H01M10/05(2010.01)i

According to International Patent Classification (IPC) or to both national classification and IPC

| B. | FIELDS SEARCHED |
| --- | --- |

Minimum documentation searched (classification system followed by classification symbols)

IPC: H01M4/-; H01M10/-

Documentation searched other than minimum documentation to the extent that such documents are included in the fields searched

Electronic data base consulted during the international search (name of data base and, where practicable, search terms used)

VCN, CNTXT, ENTXTC, ENTXT, WPABS, DWPI: 反弹比例, 反弹率, 反弹系数, 酚醛树脂, 峰, 高压, 加压, 活性材料, 活性物质, 聚丙烯腈, 沥青, 柠檬酸, 前驱体, 前体, 石墨, 石墨化, 碳化, 卸压, 泄压, 压实密度, 氧, 氧化, 氧气, 硬碳, 蔗糖, g, I, O2, °C, "d", rebound ratio, rebound rate, rebound coefficient, phenolic resin, peak, high pressure, active material, polyacrylonitrile, pitch, citric acid, precursor, graphite, graphitization, carbonization, pressure release, compaction density, oxygen, oxidation, hard carbon, sucrose

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117059763 A (NINGDE AMPEREX TECHNOLOGY LIMITED) 14 November 2023 (2023-11-14)<br>entire document | 1-13 |
| X | CN 115939493 A (DONGGUAN AMPEREX TECHNOLOGY LIMITED) 07 April 2023 (2023-04-07)<br>description, paragraphs [0070]-[0105], embodiments 12, 18, 21, 22, 24, and 25, and tables 2 and 4 | 1-13 |
| A | CN 112689919 A (NINGDE AMPEREX TECHNOLOGY LIMITED) 20 April 2021 (2021-04-20)<br>entire document | 1-13 |
| A | CN 115775877 A (DONGGUAN AMPEREX TECHNOLOGY LIMITED) 10 March 2023 (2023-03-10)<br>entire document | 1-13 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 September 2024** | **09 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/105939** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2022021273 A1 (CONTEMPORARY AMPEREX TECHNOLOGY CO., LTD.) 03 February 2022 (2022-02-03) entire document | 1-13 |
| A | KR 20210053060 A (SAMSUNG SDI CO., LTD.) 11 May 2021 (2021-05-11) entire document | 1-13 |

Form PCT/ISA/210 (second sheet) (July 2022)

**INTERNATIONAL SEARCH REPORT**
Information on patent family members

International application No.

**PCT/CN2024/105939**

| Patent document cited in search report | | | Publication date (day/month/year) | Patent family member(s) | | | Publication date (day/month/year) |
|---|---|---|---|---|---|---|---|
| CN | 117059763 | A | 14 November 2023 | None | | | |
| CN | 115939493 | A | 07 April 2023 | None | | | |
| CN | 112689919 | A | 20 April 2021 | WO | 2021212481 | A1 | 28 October 2021 |
| | | | | IN | 202117043261 | A | 12 August 2022 |
| | | | | JP | 2022538509 | A | 05 September 2022 |
| | | | | US | 2023052908 | A1 | 16 February 2023 |
| | | | | EP | 4141987 | A1 | 01 March 2023 |
| | | | | JP | 7273950 | B2 | 15 May 2023 |
| | | | | EP | 4141987 | A4 | 14 June 2023 |
| | | | | CN | 112689919 | B | 11 August 2023 |
| | | | | IN | 540907 | B | 07 June 2024 |
| CN | 115575877 | A | 10 March 2023 | None | | | |
| WO | 2022021273 | A1 | 03 February 2022 | KR | 20220116216 | A | 22 August 2022 |
| | | | | KR | 102599831 | B1 | 07 November 2023 |
| | | | | JP | 2023511046 | A | 16 March 2023 |
| | | | | JP | 7355942 | B2 | 03 October 2023 |
| | | | | US | 2022336844 | A1 | 20 October 2022 |
| | | | | US | 11658335 | B2 | 23 May 2023 |
| | | | | EP | 4167324 | A1 | 19 April 2023 |
| | | | | EP | 4167324 | A4 | 06 December 2023 |
| | | | | IN | 202227035913 | A | 22 July 2022 |
| | | | | CN | 115004418 | A | 02 September 2022 |
| | | | | CN | 115004418 | B | 12 April 2024 |
| | | | | IN | 533380 | B | 19 April 2024 |
| KR | 20210053060 | A | 11 May 2021 | None | | | |

Form PCT/ISA/210 (patent family annex) (July 2022)

**EP 4 756 907 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310980458